## Europäisches Patentamt

## European Patent Office

## Office européen des brevets

(19)

(11) Veröffentlichungsnummer: **0 002 194**
**B1**

(12) **EUROPÄISCHE PATENTSCHRIFT**

(45) Veröffentlichungstag der Patentschrift:
12.05.82

(51) Int. Cl.³: **C 04 B 35/14, C 04 B 21/00**

(21) Anmeldenummer: **78101311.5**

(22) Anmeldetag: **04.11.78**

(54) **Masse zur Herstellung feuerfester poröser Steine.**

(30) Priorität: **06.12.77 DE 2754190**

(43) Veröffentlichungstag der Anmeldung:
**13.06.79 Patentblatt 79/12**

(45) Bekanntmachung des Hinweises auf die Patenterteilung:
**12.05.82 Patentblatt 82/19**

(84) Benannte Vertragsstaaten:
**GB NL SE**

(56) Entgegenhaltungen:
**keine**

(73) Patentinhaber: **Refratechnik GmbH,
Rudolf-Winkel-Strasse 1, D-3400 Göttingen (DE)**

(72) Erfinder: **Bartha, Peter, Dr., Greifswalderstrasse 2,
D-3406 Bovenden (DE)**
Erfinder: **Tutsek, Alexander, Am Kreuze 11,
D-3400 Göttingen (DE)**

(74) Vertreter: **Goddar, Heinz, Dr. et al, FORRESTER &
BOEHMERT Widenmayerstrasse 4/I,
D-8000 München 22 (DE)**

## Masse zur Herstellung feuerfester poröser Steine

Die Erfindung betrifft eine Masse zum Herstellen feuerfester poröser wärmedämmender Steine der Werkstoffgruppe $Al_2O_3$-$SiO_2$-$P_2O_5$ mit einem $Al_2O_3$-Gehalt von weniger als 25 Gew.-% und mehr als 10 Gew.-%.

Die feuerfeste Auskleidung der Vorwärmzone von Zementdrehöfen — also desjenigen Ofenbereiches, in dem das Zementrohmehl getrocknet und kalziniert wird und der je nachdem, ob es sich bei dem angewandten Verfahren um Naß-, Trocken- oder Verfahren mit Rost- oder Zyklonvorwärmern handelt, etwa 25 bis 45% der Gesamtlänge des Drehofens ausmacht, unterliegt charakteristischen Beanspruchungen, die sich wie folgt beschreiben lassen: Da sich das Rohmaterial in diesem Ofenbereich im Stadium der Dehydration und Kalzination befindet (endotherme Prozesse), ist die Temperaturbeanspruchung als Verschleißfaktor sekundär. Die mechanische Beanspruchung durch Abrieb ist mäßig, da das Rohmehl oder die vorgeformten Granulen noch weich sind. Stark bis sehr stark hingegen ist die chemische Beanspruchung durch Alkalioxide, -sulfate, -chloride und -fluoride, die aus dem Rohmaterial und dem Brennstoff stammen und sich wegen des zur besseren Wärmeausnutzung erfolgenden Kreislaufs der Ofenabgase in der Ofenatmosphäre anreichern. Diese Stoffe kondensieren insbesondere im Bereich der Vorwärmzone auf der Oberfläche der feuerfesten Ausmauerung und diffundieren unter mehr oder weniger starker chemischer Wechselwirkung mit den Steinkomponenten in das Steininnere. Dies hat zur Folge, daß bei Schamottesteinen der Klasse A und entsprechenden Feuerleichtsteinen, die zum Teil noch in diesem Ofenbereich eingesetzt werden, Alkali-Spalling durch Bildung von Feldspat und Feldspatvertretern auftritt. Die damit verbundene Volumenvergrößerung und die Veränderung des thermischen Ausdehnungsverhaltens im Sinne einer Erhöhung des thermischen Ausdehnungskoeffizienten des Steines führen hierbei zu Abplatzungen und schnellem Steinverschleiß. Teilweise füllen sich auch die offenen Poren mit Alkaliverbindungen, woraus ebenfalls Abplatzungen von Steinschalen resultieren.

Diese Erkenntnis hat bereits dazu geführt, daß die früher verwendeten Schamottesteine der Klasse A ($Al_2O_3$-Gehalt kleiner als 45 Gew.-%, größer als 30 Gew.-%) durch niedrig $Al_2O_3$-haltige Schamottesteine oder saure Feuerleichtsteine der eingangs genannten Art mit weniger als 30 Gew.-% und mehr als 15 Gew.-% $Al_2O_3$ abgelöst wurden. Steine dieser Werkstoffgruppe zeigen insofern ein verbessertes Verhalten gegenüber den vorher eingesetzten Schamottesteinen hinsichtlich des Angriffes von Alkalien und deren Verbindungen, als sich die Umsetzungen nicht auf den gesamten Stein erstrecken, sondern sich auf dessen Oberfläche beschränken. Durch Reaktion der Alkalien mit den Steinkomponenten bilden sich hierbei an der Steinoberfläche feste Glasur-Schutzschichten, die ein tieferes Eindiffundieren der Alkalien in den Stein und die eingangs beschriebenen Abplatzungen verhindern bzw. verzögern. Dieser Mechanismus, bei dem also eine heterogene Glasurbildung an der Steinoberfläche stattfindet, die natürlich nur erfolgen kann, wenn geeignete, mit dem Steinmaterial reagierende Substanzen aus der Ofenatmosphäre herangeführt werden, ermöglichte erst den erfolgreichen Einsatz poröser, wärmedämmender Steine der eingangs genannten und beispielsweise in der GB-A-10 05 469 beschriebenen Art in der Vorwärmzone von Zementdrehöfen.

Es hat sich aber gezeigt, daß der Mechanismus der oberflächlichen Steinversiegelung infolge Ausbildung fester Schutzschichten durch heterogene Glasurbildung insbesondere bei Anwesenheit von KCl in der Ofenatmosphäre ausbleibt. Das KCl diffundiert nämlich ohne Reaktion mit dem Steinmaterial in die offenen Poren des Steins vollständig ein. Wegen der niedrigen Schmelztemperatur des KCl und insbesondere der Ausbildung eutektischer Schmelzen mit noch tieferem Schmelzpunkt bei Anwesenheit von $K_2SO_4$ erfolgt das Eindringen des KCl bei porösen wärmedämmenden Steinen so tief, daß deren Isolierfähigkeit verlorengeht und das Steingefüge durch wiederholtes Erstarren und Aufschmelzen sowie den Kristallisationsdruck von KCl zerstört wird.

Um die Infiltration von KCl in die porösen wärmedämmenden Steine zu verhindern, ist es bereits bekannt, die Steinoberfläche mit hitzebeständigen oder feuerfesten Schutzanstrichen, die ein anorganisches Bindemittel, wie z. B. Wasserglas, Aluminiumsulfat oder Monoaluminiumphosphat, enthalten, zu versehen. Derartige Schutzanstriche sind aber nur kurze Zeit wirksam, da sie durch das darübergleitende Brenngut rasch abgetragen werden und die Oberfläche des Steines somit wieder freigelegt wird. Diese freigelegte Oberfläche ist nun wiederum der Infiltration von KCl oder dergleichen voll ausgesetzt. Außerdem erfolgt der Steinverschleiß bei Alkali-Spalling durch schubartig verlaufendes Abblättern oder Abplatzen von Schichten in einer Stärke bis zu mehreren Zentimetern, so daß selbst Schutzanstriche mit theoretisch guter Haftung und hoher Abriebbeständigkeit mit den abgeplatzten Steinpartien verlorengehen. Eine Erneuerung der Schutzanstriche auf der Steinoberfläche könnte aber nur durch wiederholtes Stillsetzen des Drehofens vorgenommen werden, was völlig unwirtschaftlich ist.

Ein Versuch, die vorstehend beschriebenen Probleme der heterogenen Glasurbildung bei feuerfesten, wärmedämmenden Steinen der Werkstoffgruppe $SiO_2$-$Al_2O_3$ mit einem $Al_2O_3$-Gehalt von weniger als 25 Gew.-% und mehr als 10 Gew.-% durch autogene, nämlich von der Ofenatmosphäre unabhängige Glasurbildung an der Steinoberfläche zu beheben, wurde bislang als aussichtslos erachtet, weil man allgemein davon ausging (P. Robinson und Eric R. McCartney, »Subsolidus Relations in the System $SiO_2$-$Al_2O_3$-$P_2O_5$«, J. Am. Ceram. Soc., Vol. 47, Nr. 11, Seiten 587 bis 592), daß im System $SiO_2$-$Al_2O_3$-$P_2O_5$ keine Glasphase existent ist, die mit $SiO_2$-Phasen einerseits und Mullit andererseits kompatibel ist. Aus der GB-A-576 205 wiederum war ein Phosphatglas im System $Al_2O_3$-$SiO_2$-$P_2O_5$ mit 45 bis 80 Gewichtsteilen $P_2O_5$, 8 bis 25 Gewichtsteilen $Al_2O_3$ und 1 bis 30 Gewichtsteilen $SiO_2$ bekannt, bei dem koexistierende kristalline Phase nicht beobachtet wurden. Die DE-B-1 063 954 beschreibt eine Glasur für basische und saure Schamottesteine, die in Form einer Fritte auf Schamottesteine aufgetragen wird und diese vor Infiltrationen schützen soll, die in der Gasphase von Regenerativ- und Rekuperativkammern auftreten. Die Glasur besteht dabei im wesentlichen aus $SiO_2$ und $Al_2O_3$, mit einem Gehalt von 3 bis 5 Gew.-% von $V_2O_5$. Ein Hinweis auf die Möglichkeit einer autogenen Glasurbildung bei feuerfesten porösen Steinen der eingangs genannten Art im System $Al_2O_3$-$SiO_2$-$P_2O_5$ ist nicht gegeben.

Aus »Berichte der Deutschen Keramischen Gesellschaft, Bd. 40 (1963), H. 7, S. 399 bis 408, ist weiterhin bereits ein Phosphatglas der Zusammensetzung $4 SiO_2 \times Al_2O_3 \times 3 P_2O_5$ bekannt, welches beim Erhitzen einer Mischung der Oxide $SiO_2$, $Al_2O_3$ und $P_2O_5$ im Molverhältnis $4 : 1 : 3$ auf eine Temperatur von oberhalb 700°C entsteht, jedoch enthält diese Literaturstelle keinen Hinweis auf die Möglichkeit, eine autogene Abdichtung durch Glasurbildung bei porösen Steinen der eingangs genannten Art zu erreichen. Auch die Literaturstelle Journal of the American Society, Vol. 47 (1964), Nr. 11, S. 587−592, enthält lediglich den allgemeinen Hinweis, daß Zusammensetzungen im System $SiO_2$-$Al_2O_3$-$P_2O_5$ ausgeprägte Glasbildungseigenschaften besitzen, ohne daß hier die Möglichkeit einer Abdichtung poröser Steine der eingangs genannten Art angesprochen wäre.

Der Erfindung liegt daher die Aufgabe zugrunde, eine Masse zum Herstellen feuerfester poröser Steine zu schaffen, deren Verwendung dazu führt, daß sich bei feuerfesten porösen Steinen der eingangs genannten Art beim Einsatz in der Vorwärmzone von Zementdrehöfen bei den dort an der Steinoberfläche herrschenden Temperaturen eine autogene, also von der Ofenatmosphäre im wesentlichen unabhängige Glasurbildung ergibt.

Erfindungsgemäß wird diese Aufgabe bei einer Masse der eingangs genannten Art dadurch gelöst, daß die Masse aus einem Korngemisch besteht, dessen Feinanteil einer Korngröße von $< 0,09$ mm in einer Menge von mindestens 10 Gew.-% eine Zusammensetzung im Bereich des durch die nachfolgenden Grenzzusammensetzungen definierten Dreieckes A-B-C im Dreistoffdiagramm $Al_2O_3$-$SiO_2$-$P_2O_5$ aufweist:

A = 10,5 Gew.-% $Al_2O_3$,   84,5 Gew.-% $SiO_2$,   5 Gew.-% $P_2O_5$;
B = 28,6 Gew.-% $Al_2O_3$,   66,4 Gew.-% $SiO_2$,   5 Gew.-% $P_2O_5$;
C = 13,27 Gew.-% $Al_2O_3$, 31,29 Gew.-% $SiO_2$, 55,44 Gew.-% $P_2O_5$
[entsprechend $Si_2AlO(PO_4)_3$]

und dessen Mittel- und Grobanteil aus Zusammensetzungen des Systems $SiO_2$-$Al_2O_3$ besteht.

Besonders bevorzugte Ausführungsformen dieser Masse sind Gegenstand der entsprechenden Unteransprüche, wobei Ausgangsstoffe für derartige Zusammensetzungen als solche zum Stand der Technik gehören (Sprechsaal für Keramik-Glas-Email-Silikate 100. Jg. (1967), Nr. 21, S. 830−832; Sprechsaal für Keramik-Glas-Email-Silikate 101. Jg. (1968), Nr. 12, S. 507, 508, 510, 511).

Der erfindungsgemäß aus der vorstehend definierten Masse hergestellte feuerfeste poröse Stein weist nach dem erstmaligen Erwärmen auf eine Temperatur von 700°C bis 1100°C an seiner Oberfläche eine Glasurschicht aus einem Phosphatglas der Summenformel $Si_2AlO(PO_4)_3$ auf, welches einerseits mit $SiO_2$-Phasen, insbesondere Cristobalit oder Tridymit, und andererseits mit Mullit kompatibel ist. Dies ist eine der wichtigsten Voraussetzungen für die Wirkungsweise dieses Phosphatglases als autogener Glasurbildner für die Stoffgruppe $SiO_2 - Al_2O_3 - P_2O_5$. Die erfindungsgemäße Masse kann beispielsweise in der Weise zur Herstellung feuerfester poröser Steine verwendet werden, daß die Phase $Si_2AlO(PO_4)$ vorsynthetisiert und in bestimmten Mengenanteilen dem Feinanteil eines Korngemisches, bestehend aus den Hauptkomponenten $SiO_2$ und $Al_2O_3$, aus der Stoffgruppe Ton, Schamotte usw. zugesetzt wird, wobei die chemische Zusammensetzung der herzustellenden Steine weniger als 25 Gew.-% und mehr als 10 Gew.-% $Al_2O_3$ aufweisen soll. Der Rest der chemischen Zusammensetzung wird durch die zweite Hauptkomponente $SiO_2$ und die üblichen, untergeordneten Verunreinigungen, welche derartige feuerfeste Wirkstoffe enthalten, wie $TiO_2$, $Fe_2O_3$, $CaO$ und $MgO$ gebildet. Die Vorsynthetisierung ist in Beispiel 1 beschrieben. Es kann aber auch so vorgesehen werden, daß in dem Feinanteil die Verhältnisse von $SiO_2$, $Al_2O_3$ und $P_2O_5$ so eingestellt werden, daß sich die glasurbildende Zusammensetzung $Si_2AlO(PO_4)_3$ beim Erhitzen des Steines durch Reaktion der vorgenannten Komponenten miteinander ausbilden kann. Dies erfolgt, wie dargelegt, bei Temperaturen von 700°C und mehr, wie sie in der Vorwärmzone von Zementdrehöfen auftreten.

Als Ausgangsstoffe für das Gemenge zur Herstellung des glasurbildenden Phosphatglases nach der Erfindung können sowohl die reinen Oxide $SiO_2$, $Al_2O_3$ und $P_2O_5$ als auch andere geeignete $SiO_2$- und $Al_2O_3$-Träger, wie Quarz, Cristobalit, Tridymit, Kieselgur, Reisschalenasche, Schamotte, Tonerde, sowie als $P_2O_5$-Träger $H_3PO_4$, $Al(H_2PO_4)_3$, $(NH_4)_3PO_4$ usw. verwendet werden, wie sie in der Feuerfesttechnik üblich sind.

Die Wirkungsweise der oberflächlichen autogenen Versiegelung feuerfester wärmedämmender Steine in der Vorwärmzone von Zementdrehöfen bei Anwendung der Erfindung besteht nun darin, daß dort die Steinoberfläche einer Temperatur ausgesetzt wird, bei der die Glasphase $Si_2AlO(PO_4)_3$ eine hochviskose Schmelze bildet. Da die Steine von der Feuer- zur Mantelseite des Ofens einem Temperaturgradienten ausgesetzt sind, erniedrigt sich die Temperatur zum Ofenmantel hin. Hierdurch verglast nur die heiße, dem Ofeninneren zugewandte Steinoberfläche, während der übrige Teil des Steines unverglast bleibt. Erfolgt nun bei den eingesetzten erfindungsgemäßen Steinen zum Beispiel durch Verschleiß eine Verringerung der Ausmauerungsstärke durch Abplatzen oder Abrieb oberflächlicher Schichten, so wird die Glasschicht im Rhythmus des Steinverschleißes immer wieder an der Oberfläche autogen neu ausgebildet. Durch diesen Vorgang wird der allmählich verschleißende Stein vor einer Infiltration von Alkalien, insbesondere aber vor einer Infiltration von KCl in die offenen Poren geschützt.

Aus den vorstehenden Darlegungen geht hervor, daß ein wärmedämmender Stein, der die oben beschriebene Wirkungsweise in der Vorwärmzone von Zementdrehöfen zeigen soll, bei seiner Herstellung unterhalb des Schmelzintervalls der Glasphase $Si_2AlO(PO_4)_3$ getrocknet und/oder gebrannt werden muß. Vorteilhaft ist es auch, solche wärmedämmenden Steine in ungebranntem Zustand einzusetzen, wobei das zur Bildung von $Si_2AlO(PO_4)_3$ erforderliche $P_2O_5$ in Form von gleichzeitig als chemische Binder wirksamen Stoffen, wie $H_3PO_4$, $Al(H_2PO_4)_3$ oder dergleichen, eingebracht werden kann, wobei sich ab 700°C durch Reaktion des $P_2O_5$-Trägers mit den reaktionsfähigen Anteilen von $SiO_2$ und $Al_2O_3$ $Si_2AlO(PO_4)_3$ bilden kann.

Da in einem üblichen Korngemisch zur Herstellung feuerfester Steine, das beispielsweise zwischen 0 und 4 mm Korngröße liegen kann, nur der Feinanteil mit einer Korngröße von weniger als 0,09 mm an der Ausbildung der Glasphase $Si_2AlO(PO_4)_3$ beteiligt ist, ist es zweckmäßig, als Mittel- und Grobkornanteil (0,09 bis 2 mm bzw. 2 bis 4 mm) Zusammensetzungen des Systems $SiO_2$-$Al_2O_3$ zu wählen, die neben Cristobalit und Tridymit bereits viel Glasphase enthalten. Dies sind entsprechend dem Schmelzdiagramm $SiO_2$-$Al_2O_3$ Zusammensetzungen, die sich nahe dem Eutektikum dieses Systems befinden und in der Nomenklatur der Feuerfestindustrie als saure Schamotte der Klasse B bezeichnet werden. Sie sind durch Gehalte von mindestens 10 Gew.-% und höchstens 30 Gew.-% $Al_2O_3$ gekennzeichnet. Eine Überschreitung dieses $Al_2O_3$-Gehaltes vermindert die gewünschte Alkalibeständigkeit des Grob- und Mittelkornanteiles der Steine, während ein Unterschreiten dieses $Al_2O_3$-Gehaltes bei der chemischen Reaktion mit Alkalien zu derart dünnflüssigen Reaktionsprodukten führt, daß der Stein schnell abgetragen wird.

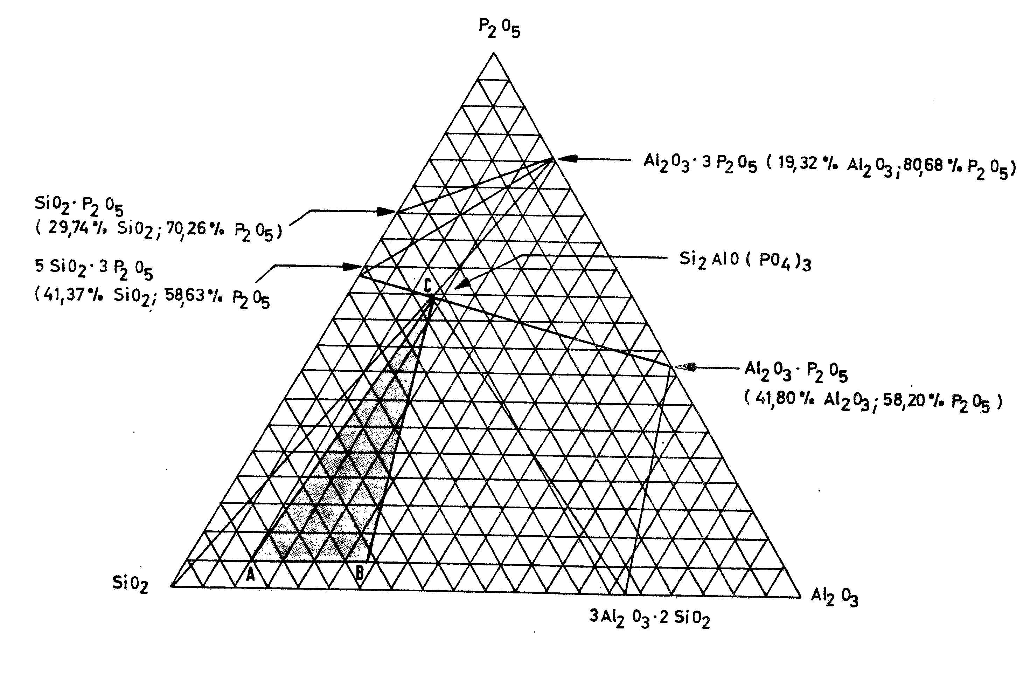

Nachfolgend werden Ausführungsbeispiele der Erfindung anhand der Zeichnung, die das Kompatibilitätsdreieck für die Oxide $SiO_2$, $Al_2O_3$ und $P_2O_5$ zeigt, im einzelnen erläutert.

### Beispiel 1
### Vorsynthetisieren der Verbindung $SiO_2AlO(PO_4)_3$

$SiO_2$-Gel Merck (röntgenamorph), $Al_2O_3$ (aktiv, neutral) und Orthophosphorsäure (75%ig) wurden, bezogen auf die reinen Oxide $SiO_2$, $Al_2O_3$ und $P_2O_5$, im molaren Verhältnis 4 : 1 : 3 gemischt und bei Temperaturen zwischen 700 und 1000°C mehrere Stunden erhitzt und anschließend geröngt. Oberhalb von 700°C konnte die Glasphase $Si_2AlO(PO_4)_3$ nachgewiesen werden, deren Röntgendaten in Tafel 2 zusammengestellt sind.

Das Schmelzintervall der Verbindung $Si_2AlO(PO_4)_3$ wurde im Erhitzungsmikroskop zu 1000 bis 1300°C bestimmt.

### Beispiel 2

30 Gew.-% Schamotte 2−4 mm, 10 Gew.-% Schamotte 2−1 mm, 25 Gew.-% Schamotte 1−0,09 mm, 25 Gew.-% Schamotte <0,09 mm und 10 Gew.-% Bindeton <0,09 mm wurden gemischt und mit 12 Gew.-% $H_3PO_4$ (75%ig) versetzt, verpreßt und zwischen 300 und 1000°C mehrere Stunden lang erhitzt. Oberhalb von 700°C konnte die Glasphase $Si_2AlO(PO_4)_3$ nachgewiesen werden. Zwischen 1000 und 1300°C zeigte der Stein eine Verglasung durch Aufschmelzen der Phase $Si_2AlO(PO_4)_3$.

Die Zusammensetzung der verwendeten Rohstoffe zeigt die nachstehende Tafel 1:

Tafel 1

| Oxid | Schamotte | Bindeton | H₃PO₄ 75% |
|---|---|---|---|
| $SiO_2$ | 76,87% | 54,90% | — |
| $Al_2O_3$ | 17,60% | 37,19% | — |
| $Fe_2O_3$ | 0,76% | 2,74% | — |
| $TiO_2$ | 1,55% | 1,64% | — |
| CaO | 0,76% | 0,91% | — |
| MgO | 0,79% | 0,64% | — |
| $Na_2O + K_2O$ | 1,67% | 1,59% | — |
| $P_2O_5$ | — | — | 54,32% |

Aus dem Beispiel 2 entsprechenden Gemenge wurden Probekörper gepreßt und bei 1110°C gebrannt. Zum Vergleich wurde ein Probekörper derselben Zusammensetzung, jedoch ohne H₃PO₄, verpreßt und bei 1100°C gebrannt. Die Probekörper wurden danach zu Tiegeln ausgebohrt, jeweils mit derselben Menge KCl gefüllt und fünf Stunden lang bei 1100°C in einem Laborofen gebrannt. Nach dem Erkalten wurde bei der Zusammensetzung gemäß Beispiel 2 eine starke Verglasung der Tiegelinnenwand beobachtet, ohne daß wesentliche Mengen an KCl in das Steinmaterial diffundiert waren. Bei dem P₂O₅-freien Probekörper derselben Grundzusammensetzung wurden hingegen Bursting und eine Infiltration des Steines mit KCl festgestellt.

Die Zeichnung zeigt das Kompatibilitätsdreieck für die Oxide SiO₂, Al₂O₃ und P₂O₅ mit der glasurbildenden Phase Si₂AlO(PO₄)₃ nach der Erfindung. Wie aus dem Teildreieck SiO₂—Si₂AlO(PO₄)₃-Mullit hervorgeht, sind diese drei Verbindungen nebeneinander beständig. Der schraffierte Bereich zeigt den zur Verwendung bei feuerfesten wärmedämmenden Steinen nach der Erfindung beanspruchten Bereich von Zusammensetzungen der Oxide SiO₂, Al₂O₃ und P₂O₅ im Feinanteil mit einer Korngröße von <0,09 mm bei den für die Steinherstellung üblichen Kornfraktionen.

Tafel 2

Röntgendaten der Verbindung Si₂AlO(PO₄)₃:

| d | I | d | I |
|---|---|---|---|
| 7,72 | 4 | 2,98 | 5 |
| 6,89 | 12 | 2,90 | 1 |
| 4,81 | 20 | 2,84 | 2 |
| 4,42 | 14 | 2,76 | 4 |
| 3,99 | 10 | 2,72 | 5 |
| 3,81 | 4 | 2,61 | 4 |
| 3,72 | 6 | 2,51 | 10 |
| 3,64 | 100 | 2,42 | 3 |
| 3,53 | 2 | 2,37 | 3 |
| 3,46 | 6 | 2,30 | 5 |
| 3,13 | 1 | 2,23 | 5 |

## Patentansprüche

1. Masse zur Herstellung feuerfester poröser wärmedämmender Steine der Werkstoffgruppe $Al_2O_3-SiO_2-P_2O_5$ mit einem $Al_2O_3$-Gehalt von weniger als 25 Gew.-% und mehr als 10 Gew.-%, dadurch gekennzeichnet, daß die Masse aus einem Korngemisch besteht, dessen Feinanteil einer Korngröße von <0,09 mm in einer Menge von mindestens 10 Gew.-% eine Zusammensetzung im Bereich des durch die nachfolgenden Grenzzusammensetzungen definierten Dreieckes A-B-C im Dreistoffdiagramm $Al_2O_3-SiO_2-P_2O_5$ aufweist:

A = 10,5 Gew.-% $Al_2O_3$, 84,5 Gew.-% $SiO_2$, 5 Gew.-% $P_2O_5$;
B = 28,6 Gew.-% $Al_2O_3$, 66,4 Gew.-% $SiO_2$, 5 Gew.-% $P_2O_5$;
C = 13,27 Gew.-% $Al_2O_3$, 31,29 Gew.-% $SiO_2$, 55,44 Gew.-% $P_2O_5$
[entsprechend $Si_2AlO(PO_4)_3$]

und dessen Mittel- und Grobkornanteil aus Zusammensetzungen des Systems $SiO_2-Al_2O_3$ besteht.

2. Masse nach Anspruch 1, dadurch gekennzeichnet, daß als Ausgangsstoffe für die $SiO_2$-Komponente des Feinanteiles Kieselgur, Reisschalenasche, Tridymit oder Cristobalit und für die $P_2O_5$-Komponente des Feinanteils $H_3PO_4$, saure oder neutrale Aluminium- oder Ammoniumphosphate vorgesehen sind.

3. Masse nach Anspruch 1 oder 2, gekennzeichnet durch einen Feinanteil von wenigstens 40 Gew.-%.

4. Masse nach Anspruch 3, gekennzeichnet durch einen Feinanteil von wenigstens 45 Gew.-%.

5. Masse nach einem der vorangehenden Ansprüche, dadurch gekennzeichnet, daß der Mittel- und Grobanteil der Masse aus Zusammensetzungen des Systems $SiO_2-Al_2O_3$ mit einem $Al_2O_3$-Gehalt von mindestens 10 Gew.-% und höchstens 30 Gew.-% besteht.

6. Masse nach Anspruch 5, dadurch gekennzeichnet, daß als Ausgangsstoffe für die Mittel- und Grobkornanteile saure Schamotte, Reisschalenasche, Tridymit oder Cristobalit eingesetzt sind.

7. Feuerfester poröser Stein, hergestellt unter Verwendung einer Masse nach einem der vorangehenden Ansprüche.

## Claims

1. A compound for the manufacture of refractory porous heat-insulating bricks of the material group $Al_2O_3-SiO_2-P_2O_5$ having an $Al_2O_3$ content of less than 25% by weight and more than 10% by weight, characterised in that the compound consists of a particle mixture whose fine fraction in a particle size of <0.09 mm in a quantity of at least 10% by weight has a composition which in the $Al_2O_3-SiO_2-P_2O_5$ three-component diagram is situated in the area of the triangle A-B-C defined by the following limit compositions:

A = 10.5% by weight $Al_2O_3$, 84.5% by weight $SiO_2$, 5% by weight $P_2O_5$;
B = 28.6% by weight $Al_2O_3$, 66.4% by weight $SiO_2$, 5% by weight $P_2O_5$;
C = 13.27% by weight $Al_2O_3$; 31.29% by weight $SiO_2$, 55.44% by weight $P_2O_5$
[corresponding to $Si_2AlO(PO_4)_3$]

and whose medium and coarse particle fraction consists of compositions of the $SiO_2-Al_2O_3$ system.

2. A compound according to claim 1, characterised in that the raw materials used for the $SiO_2$ component of the fine fraction are kieselgur, rice husk ash, tridymite or cristobalite and for the $P_2O_5$ component of the fine fraction $H_3PO_4$, acidic or neutral aluminium or ammonium phosphates.

3. A compound according to claim 1 or 2, characterised by a fine fraction of at least 40% by weight.

4. A compound according to claim 3, characterised by a fine fraction of at least 45% by weight.

5. A compound according to any one of the preceding claims, characterised in that the medium and coarse fraction of the compound consists of compositions of the system $SiO_2-Al_2O_3$ having an $Al_2O_3$ content of at least 10% by weight and not more than 30% by weight.

6. A compound according to claim 5, characterised in that the raw materials used for the medium and coarse particle fractions are acidic chamotte, rice husk ash, tridymite or cristobalite.

7. A refractory porous brick manufactured using a compound according to any one of the preceding claims.

## Revendications

1. Masse pour la préparation de briques réfractaires, poreuses, calorifuges de groupe de matière $Al_2O_3-SiO_2-P_2O_5$ d'une teneur en $Al_2O_3$ inférieure à 25% en poids et supérieure à 10% en poids, caractérisée par le fait que la masse est constituée d'un mélange de grains dont la partie fine, d'une grosseur de grains de moins 0,09 mm en proportion de moins de 10% en poids, possède une composition située dans les limites du triangle A-B-C défini par les compositions limites suivantes dans le diagramme ternaire $Al_2O_3 - SiO_2 - P_2O_5$:

A   =  10,5% en poids $Al_2O_3$,   84,5% en poids $SiO_2$,   5% en poids $P_2O_5$,
B   =  28,6% en poids $Al_2O_3$,   66,4% en poids $SiO_2$,   5% en poids $P_2O_5$,
C   =  13,27% en poids $Al_2O_3$,  31,29% en poids $SiO_2$, 55,44% en poids $P_2O_5$
[correspondant à $Si_2AlO(PO_4)_3$]

et dont les parties moyenne et grossière ont la composition du système $SiO_2 - Al_2O_3$.

2. Masse selon la revendication 1, caractérisée par le fait que, comme matière de départ pour le composant $SiO_2$ de la partie fine, ont été prévus le kieselgur, les cendres de balles de riz, la tridymite, la cristobalite et, pour la composante $P_2O_5$ de la partie fine, $H_3PO_4$, le phosphate acide ou neutre d'aluminium ou d'ammonium.

3. Masse selon la revendication 1 ou 2, caractérisée par une partie fine de moins de 45% en poids.

4. Masse selon la revendication 3, caractérisée par une partie fine de moins de 40% en poids.

5. Masse selon l'une des revendications précédentes, caractérisée par le fait que la partie moyenne et grossière de la masse est constituée par des compositions du système $SiO_2 - Al_2O_3$ avec une teneur en $Al_2O_3$ d'au moins 10% en poids et d'au plus 30% en poids.

6. Masse selon la revendication 5, caractérisée par le fait que comme produits de départ pour la partie moyenne et grossière, on utilise de la chamotte acide, des cendres de balles de riz, de la tridymite ou de la cristobalite.

7. Brique réfractaire, poreuse, fabriquée en utilisant une masse selon l'une des revendications précédentes.

$P_2 O_5$

$Al_2 O_3 \cdot 3 P_2 O_5$ ( 19,32 % $Al_2 O_3$ ; 80,68 % $P_2 O_5$)

$SiO_2 \cdot P_2 O_5$
( 29,74 % $SiO_2$ ; 70,26 % $P_2 O_5$ )

$Si_2 AlO ( PO_4)_3$

$5 SiO_2 \cdot 3 P_2 O_5$
(41,37 % $SiO_2$ ; 58,63 % $P_2 O_5$

$Al_2 O_3 \cdot P_2 O_5$
( 41,80 % $Al_2 O_3$ ; 58,20 % $P_2 O_5$ )

C

A    B

$SiO_2$

$Al_2 O_3$

$3 Al_2 O_3 \cdot 2 SiO_2$

9

0 002 194